# EUROPÄISCHE PATENTANMELDUNG

(11) **EP 0 860 956 A2**
(43) Veröffentlichungstag der Anmeldung: **26.08.1998**
(21) Anmeldenummer: 98101677.7
(22) Anmeldetag: 31.01.1998
(51) Int. Cl.: H04L 12/28, H04M 11/04, H04L 12/46

(54) **Übergangseinrichtung zwischen Teilnehmeranschlüssen und Hausnetzwerk**

(30) Priorität: 22.02.1997 DE 19707190
(71) Anmelder: ALCATEL ALSTHOM COMPAGNIE GENERALE D'ELECTRICITE, 75008 Paris (FR)
(72) Erfinder: Matt, Hans Jürgen, Dr., 71686 Remseck (DE); Barth, Ulrich, Dipl.-Ing., 70825 Münchingen (DE); Sauer, Peter, Dr.-Ing., 71254 Ditzingen (DE)
(74) Vertreter: KOHLER SCHMID + PARTNER

(57) **Zusammenfassung**

Eine Netzübergangseinrichtung (1) zur Verbindung eines Hausnetzwerks (2) mit Teilnehmeranschluß-Netzwerken (3) von Diensteanbietern mit einer ersten äußeren Schnittstelle (4) zur Aufnahme von Informationssignalen aus Koaxialkabeln von Teilnehmeranschluß-Netzwerken und mit mindestens einer inneren Schnittstelle (5) zur Weiterleitung der Informationssignale an Endgeräte im Hausnetzwerk (2) über Koaxialkabel (6), ist dadurch gekennzeichnet, daß weitere äußere Schnittstellen (4', 4'', 4''',...) zum interaktiven Austausch von Informationssignalen mit weiteren Arten von Teilnehmeranschluß-Netzwerken vorgesehen sind, wobei mindestens eine äußere Schnittstelle (4') eine Verbindung zu einem Teilnehmeranschluß-Netzwerk mit Klingeldraht herstellt, und daß eine kombinierte Vermittlungs- und Steuereinheit (8), insbesondere mit einem Mikroprozessor (9) vorgesehen ist, die jeweils die Informationssignale eines bestimmten Diensteanbieters von der entsprechenden äußeren Schnittstelle (4, 4', 4'', 4''',...) des Teilnehmeranschluß-Netzwerkes an eine oder mehrere innere Schnittstellen (5, 5', 5'') des Hausnetzwerkes (2) oder vice versa leitet. Damit können Informationssignale bei einer großen Vielzahl von möglicherweise völlig unterschiedlichen Diensteanbietern an Endgeräte in einem Hausnetz sowie auch in umgekehrter Richtung verteilt werden, wobei die normalerweise vorhandene Netzwerk-Hardware umfassend und mit möglichst geringen Zusätzen oder Änderungen genutzt werden kann.

## Beschreibung

Die Erfindung betrifft eine Netzübergangseinrichtung zur Verbindung eines Hausnetzwerks mit Teilnehmeransohluß-Netzwerken von Diensteanbietern mit einer ersten äußeren Schnittstelle zur Aufnahme von Informationssignalen aus Koaxialkabeln von Teilnehmeranschluß-Netzwerken und mit mindestens einer inneren Schnittstelle zur Weiterleitung der Informationssignale an Endgeräte im Hausnetzwerk über Koaxialkabel.

Eine derartige Netzübergangseinrichtung ist beispielsweise bekannt aus einem Artikel von R.C. Hutchinson mit dem Titel "Architectural Framework for Standardizing Multimedia Services on Fiber-Coax" in IEEE... (1994), Seiten 213 bis 217.

Neben dem klassischen öffentlichen Fernsprechnetz ("POT" = Plain Old Telephone) wurden in den letzten Jahren zunehmend weitere Teilnehmeranschluß-Netzwerke von Diensteanbietern für den Zugriff zum privaten oder geschäftlichen Gebrauch angeboten. Neben dem ISDN für komfortablere Telefonie gehören dazu beispielsweise Kabelfernsehnetze (CATV), Hybridfiberkoaxialkabelnetze (HFC = Hybrid Fibre Coax) sowie drahtlos übermittelnde Telefonnetze, wie beispielsweise das in Deutschland privat betriebene D2-Netz. Erheblich mehr derartige Teilnehmeranschluß-Netzwerke sollen von Diensteanbietern in den nächsten Jahren eröffnet werden. In Bearbeitung bzw. Planung sind derzeit beispielsweise ATM (Asyncronous Transfer Mode)-Netze, STM (Syncronous Transfer Mode, leitungsvermittelt)-Netze, ADSL (Asymmetric Digital Subscriber Line), VHDSL (Very High Speed Digital Subscriber Line), DECT (Digital Enhanced Cordless Telephone) und GSM (Global System Mobile)-Netze. Bis zum Jahr 2000 wird es noch sehr viele weitere Anbieter geben, die Teilnehmeranschluß-Netzwerke mit entsprechenden Diensten für private oder firmenmäßige Nutzer als Endverbraucher anbieten werden.

Auf der anderen Seite ist beim Endkunden, insbesondere in privaten Haushalten derzeit zumindest ein "Klingeldraht"-Netz mit symmetrischen verdrillten Kabeln (twisted pair) für die klassische Telefonie sowie ein Koaxialkabelnetz für TV-Endgeräte üblicherweise vorhanden. Im folgenden sollen alle derartigen Signalleitungsnetze im Haus, zu denen beispielsweise auch Signalverbindungsleitungen für Gegensprechanlagen, Computernetzwerke, Nebenstellenanlagen (PBX = private branch exchange) und dergleichen gezählt werden sollen, mit dem Begriff "Hausnetzwerk" bezeichnet werden. Unter dem Begriff "Endgerät" soll ein beliebig geartetes Gerät, wie beispielsweise eine Steuereinrichtung, eine Alarmeinrichtung, eine Meß- und Regeleinrichtung, ein Zähler, ein Telekommunikationsgerät, ein Fernsehgerät, ein Computer und dergleichen, das an derartige Hausnetzwerke anschließbar ist, verstanden werden.

In dem eingangs zitierten Fachartikel von Hutchinson wird ein Rahmensystem (Frame Work) zur Standardisierung und Anlieferung von Multimedia-Diensten auf Fiberkoaxialkabeln vorgeschlagen. Das beschriebene Rahmensystem soll es Endverbrauchern ermöglichen, möglichst freien Zugang zu dem Teilnehmeranlschuß-Netzwerk eines Diensteanbieters zu erhalten. Allerdings wird dabei lediglich der Aspekt eines Anschlusses von Diensten berücksichtigt, die über Fiberkoaxialkabel an den Endverbraucher gelangen, wie beispielsweise analoges oder digitales Fernsehen, interaktives TV, Kabel-TV oder HFC-Systeme.

Aus einem Artikel von Masami Kato et al. mit dem Titel "VISUAL COMMUNICATION SYSTEM IN AN APPARTMENT HOUSE USING ONLY TWISTED PAIRED CALBE" in IEEE Transactions on Consumers Electronics, Vol. 40, No. 3, August 1994, Seiten 418 bis 427 wird wiederum ein System zur visuellen Kommunikation für Appartmenthäuser vorgeschlagen, das aus einem Haus-Bus und einem Netzwerk besteht, welches in einem solchen Appartmentkomplex benutzt werden kann. Das bekannte System benutzt ausschließlich ein Netzwerk von verdrillten Klingeldrahtkabeln und bietet eine Vielzahl von Diensten an. Hierbei finden jedoch wiederum andere Unternetzwerke, wie beispielsweise Koaxialkabelnetzwerke, keine Berücksichtigung.

Aufgabe der vorliegenden Erfindung ist es demgegenüber, eine Netzübergangseinrichtung der eingangs beschriebenen Art vorzustellen, die Informationssignale von einer großen Vielzahl von möglicherweise völlig unterschiedlichen Diensteanbietern über eine Netzübergangseinrichtung an Endgeräte in einem Hausnetz sowie auch in umgekehrter Richtung verteilen kann, wobei die normalerweise im Haus vorhandene Netzwerk-Kabelanlage umfassend und mit möglichst geringen Zusätzen oder Änderungen genutzt werden kann.

Erfindungsgemäß wird diese Aufgabe dadurch gelöst, daß weitere äußere Schnittstellen zum interaktiven Austausch von Informationssignalen mit weiteren Arten von Teilnehmeranschluß-Netzwerken vorgesehen sind, wobei mindestens eine äußere Schnittstelle eine Verbindung zu einem Teilnehmeranschluß-Netzwerk mit symmetrisch verdrillten Kabeln ("Klingeldraht") herstellt, und daß eine kombinierte Vermittlungs- und Steuereinheit, insbesondere mit einem Mikroprozessor vorgesehen ist, die jeweils die Informationssignale eines bestimmten Diensteanbieters von der entsprechenden äußeren Schnittstelle des Teilnehmeranschluß-Netzwerkes an eine oder mehrere innere Schnittstellen des Hausnetzwerkes oder vice versa leitet.

Mit einer derartigen erfindungsgemäßen Netzübergangseinrichtung wird es einem Endverbraucher auf einfache Weise ermöglicht, unidirektionale und bidirektionale Datenverbindungen mit öffentlichen und privaten Diensteanbietern über deren Teilnehmeranschluß-Netzwerke zu etablieren und über Endgeräte, die an seinem Hausnetz installiert sind, mit den entsprechenden Diensten zu kommunizieren bzw. entsprechende Informationssignale zu empfangen. Dabei werden die ohnehin bereits im Haus vorhandenen Verkabelungen zu einem Hausnetzwerk zusammengefaßt, das bis in seine letzten Verästelungen Kontakt mit sämtlichen, auch völlig unterschiedlich gearteten Teilnehmeranschluß-Netzwerken über die erfindungsgemäße Netzübergangseinrichtung aufnehmen kann.

Besonders bevorzugt ist eine Ausführungsform der erfindungsgemäßen Netzübergangseinrichtung, bei der eine Vermittlungseinheit zur bedarfsweisen Verbindung eines Teilnehmeranschluß-Netzwerks für eine bestimmte Dienstekategorie, beispielsweise Telefondienste, mit einem im Hausnetzwerk enthaltenen Klingeldraht-Netz vorgesehen ist. Die Vermittlungseinheit kann beispielsweise Teil einer klassischen Telefonanlage sein. Da praktisch in jedem Haushalt heutzutage ein Telefonkabelnetz vorliegt, eignet sich dieses als Ausgangspunkt für eine intelligente Netzübergangseinrichtung mit einer entsprechenden Vermittlungseinheit.

In einer bevorzugten Weiterbildung dieser Ausführungsform kann die Vermittlungseinheit sowohl schmalbandige als auch breitbandige uni- und bidirektionale Informationssignale verarbeiten. Damit kann die erfindungsgemäße Netzübergangseinrichtung eine Vielzahl von möglicherweise völlig unterschiedlichen Endgeräten mit einer anderen Vielzahl von ebenfalls möglicherweise völlig unterschiedlichen Teilnehmeranschluß-Netzwerken verbinden.

Besonders bevorzugt ist auch eine Ausführungsform der erfindungsgemäßen Netzübergangseinrichtung, bei der an ein oder mehrere innere Schnittstellen ein Haus-Bus-System angeschlossen ist, über welches ein Austausch von Informationssignalen zwischen der kombinierten Vermittlungs- und Steuereinheit und beliebigen Endgeräten im Hausnetzwerk ermöglicht wird. Damit kann eine besonders übersichtliche und einfache logische Verdrahtung innerhalb des Hausnetzwerkes bereitgestellt werden.

Insbesondere in Kombination mit dem oben beschriebenen Haus-Bus-System und/oder mit der oben beschriebenen Vermittlungseinheit in Form einer Telekommunikationsanlage sind auch die folgenden Ausführungsformen der erfindungsgemäßen Netzübergangseinrichtung besonders vorteilhaft:

Bei einer Ausführungsform kann ein Endgerät eine Vorrichtung zur Betätigung einer Heizungsanlage umfassen. Damit kann auf einfache Weise entweder von einem anderen Endgerät innerhalb des Hausnetzes oder durch eine entsprechende Software in der Vermittlung- und Steuereinheit oder auch durch Fernwirken von außerhalb des Hauses die Temperatur in einem Haus über eine entsprechende Betätigung der Heizungsanlage beeinflußt werden. Vorzugsweise umfaßt das entsprechende Endgerät auch einen Temperaturmeßfühler, damit die vorherrschende Temperatur aufgenommen und beispielsweise als Regelgröße einem Regelkreis zugeführt werden kann.

Bei einer weiteren Ausführungsform umfaßt ein Endgerät eine Vorrichtung zur Betätigung einer Beleuchtungsanlage, vorzugsweise auch einen Helligkeitssensor. Damit kann ebenso, wie oben im Zusammenhang mit der Heizungsanlage beschrieben, die Beleuchtungssituation im Haus automatisch überwacht, gesteuert oder geregelt werden.

Bei einer weiteren Ausführungsform umfaßt ein Endgerät eine Vorrichtung zur Betätigung eines Rolladens und vorzugsweise zusätzlich einen Helligkeitssensor. Damit kann eine bequeme automatische oder wahlweise auch manuell fernbedienbare Rollandensteuerung eingerichtet werden.

Ganz besonders bevorzugt sind Ausführungsformen der erfindungsgemäßen Netzübergangseinrichtung, die sich dadurch auszeichnen, daß ein Endgerät eine Vorrichtung zur Überwachung der Umgebung auf physikalische Veränderungen, beispielsweise einen Rauchmelder, einen Feuermelder, einen Gasmelder oder einen Wassermelder umfaßt, und daß die kombinierte Vermittlungs- und Steuereinheit bei Empfang eines Informationssignales von diesem Endgerät ein Alarmsignal zur Auslösung eines Alarms an eine Alarmeinrichtung weitergibt. Damit lassen sich sämtliche denkbaren Überwachungsfunktionen im Bereich eines Wohnhauses, aber auch eines Geschäftslokals, einer Behörde oder einer Fabrik auf simple Weise einem Steuer- oder Regelsystem, zumindest aber einem Warnsystem zuführen.

Besonders bevorzugt ist eine Weiterbildung dieser Ausführungsform, bei der vorgesehen ist, daß das Endgerät mit einem oder mehreren Sensoren einer Einbruchssicherungsanlage verbunden ist, und daß ein Alarmsignal automatisch über ein äußeres Telekommunikationsnetzwerk beispielsweise an eine Polizeidienststelle weitergeleitet werden kann. Derartige Alarmsysteme existieren häufig schon und können mit Hilfe der erfindungsgemäßen Netzübergangseinrichtung auf einfachste Weise in ein Hausnetzwerk integriert werden, wobei automatisch eine Verbindung nach außen im Falle eines Alarms hergestellt werden kann.

Eine weitere Kategorie von erfindungsgemäßen Ausführungsformen sieht vor, daß ein Endgerät eine Einrichtung zur Verbrauchsablesung, beispielsweise einen Strom-, Wasser- oder Gaszähler umfaßt, und daß die kombinierte Vermittlungs- und Steuereinheit in festlegbaren Zeitabständen Daten von abgelesenen Verbrauchswerten empfängt. Damit lassen sich Verbrauchsablesefunktionen ganz entscheidend vereinfachen und damit für den Endverbraucher enorm verbilligen.

Bei vorteilhaften Weiterbildungen dieser Ausführungsformen kann eine Speichereinheit vorgesehen sein, in der die abgelesenen Verbrauchswerte abgespeichert und ggf. abgerufen werden können. Damit wird die Verbrauchsablesung und insbesondere die Verbrauchsentwicklung auch für den Endverbraucher selbst transparent.

Bei einer vorteilhaften Weiterbildung kann außerdem vorgesehen sein, daß die Daten von abgelesenen Verbrauchswerten automatisch oder nach Anfrage über eine äußere Schnittstelle auf ein äußeres Telekommunikationsnetzwerk und zu einem Anbieter, beispielsweise einem Energieversorger, einem Wasserwerk oder einem Gaswerk gesendet werden können. Eine derartig automatisierte Verbrauchsablesung kann vom Anbieter der entsprechend verbrauchten Dienstleistung praktisch zum Nulltarif angeboten werden, was die Gesamtkosten der Dienstleistung ganz erheblich senken kann.

Besonders bevorzugt ist auch eine Ausführungsform der erfindungsgemäßen Netzübergangseinrichtung, bei der die kombinierte Vermittlungs- und Steuereinheit Fernwirksignale über eine der äußeren Schnittstellen empfangen und nach Überprüfung einer Berechtigung an ein an das Hausnetzwerk angeschlossenes Endgerät weiterleiten kann. Auf diese Weise wird dem Inhaber einer entsprechenden Berechtigung, die beispielsweise in Form eines Paßworts vorliegen kann, eine Möglichkeit zur Einwirkung auf Hausnetzwerk-Endgeräte von außerhalb des Hauses, beispielsweise über Telefon an die Hand gegeben.

Die Möglichkeiten der Nutzung eines solchen Fernwirksystems sind nahezu unerschöpflich. Beispielsweise kann man in der kalten Jahreszeit, von einer Reise zurückkommend, rechtzeitig vor Eintreffen zu Hause, die vorherrschende Haustemperatur abfragen und die Heizung derart betätigen, daß die Temperatur bei Eintreffen zu Hause ein angenehmes Niveau erreicht hat. Mit diesem System können aber auch häusliche Anrufbeantworter, Mailboxen und andere Arten von im Haus befindlichen Datenspeichern von unterwegs aus abgefragt werden. Es können auch beispielsweise klappenähnliche Öffnungseinrichtungen fernwirkend betätigt werden, damit ein im Haus befindlicher Hund oder eine Katze ihrer natürlichen Neigung entsprechend das Haus verlassen oder wieder betreten kann, obwohl der Besitzer abwesend ist und ohne daß ein unberechtigtes Eindringen in das Haus beispielsweise durch Einbrecher gefördert wird. Denkbar wäre auch, über den geschilderten Fernwirkpfad rechtzeitig von Eintreffen zu Hause eine Beladeeinrichtung für ein Mikrowellengerät zu betätigen, um dann sofort bei Eintreffen zu Hause die fertig zubereitet warme Mahlzeit vorzufinden.

Von großen Vorteil ist auch eine Ausführungsform der erfindungsgemäßen Netzübergangseinrichtung, bei der eine Türsprechanlage vorgesehen ist, die ein Endgerät mit einer Betätigungseinheit zur ferngesteuerten Türöffnung, einem Mikrophon, einem Lautsprecher und ggf. einer Videokamera umfaßt, welches an eine Schnittstelle der Netzübertragungseinrichtung angeschlossen ist, und die einen Türruf mindestens an ein weiteres Endgerät leitet, welches über das Hausnetzwerk an eine innere Schnittstelle angeschlossen ist, oder welches über die Netzübergangseinrichtung per Fernwahl erreichbar ist.

Die Integration einer solchen Türsprechanlage in das Hausnetzwerk kann im übrigen sowohl durch Anschließen der außerhalb des Hauses befindlichen Anlagenteile an eine äußere als auch an eine innere Schnittstelle der Netzübergangseinrichtung erreicht werden. Üblicherweise werden aber Klingeldrähte als hausinternes System betrachtet und daher an innere Schnittstellen der Netzübergangseinrichtung angeschlossen werden. Auch in diesem Falle besteht wiederum die Möglichkeit einer Fernwirkung durch Benutzung von Informationsübertragungskanälen über äußere Schnittstellen an der Netzübergangseinrichtung.

Bei einer weiteren Ausführungsform ist vorgesehen, daß die kombinierte Vermittlungs- und Steuereinheit eine Einrichtung zur Gebührenerfassung für Telekommunikationsdienste umfaßt. Dies ist insbesondere vorteilhaft im Zusammenhang mit einer Telekommunikationsanlage, wie sie weiter oben beschrieben ist.

Bei einer weiteren vorteilhaften Ausführungsform der erfindungsgemäßen Netzübergangseinrichtung ist vorgesehen, daß die kombinierte Vermittlungs- und Steuereinheit externe Anrufe erkennungsmäßig bearbeitet und je nach Voreinstellung (Konfiguration) eintreffende Anrufe an eine berechtigte Stelle (Teilnehmer) im Haus bzw. außerhalb des Hauses über eine der externen Schnittstellen weiterleitet.

Dabei kann der externe Anruf beispielsweise auch von einer Tür-Sprechanlage mit oder ohne Bild erfolgen.

Bei einer weiteren vorteilhaften Ausführungsform der erfindungsgemäßen Netzübergangseinrichtung ist vorgesehen, daß die kombinierte Vermittlungs- und Steuereinheit eine Server-Einrichtung zur Aufnahme, Zwischenspeicherung und Abrufung von Nachrichten, beispielsweise Voice Mail (Anrufbeantworter), Data Mail und/oder Video Mail umfäßt. Mit einer derartigen Server-Einrichtung können neben den genannten nahezu beliebig viele weitere Dienstleisungsfunktionen hausnetzintern bereitgestellt und dem einfachen Zugriff über ein Endgerät des Hausnetzwerks eröffnet werden.

Vorteilhaft ist auch eine Ausführungsform, bei der eine Zusatzeinrichtung zur Dekodierung empfangener Signale vorgesehen ist.

Insbesondere kann die Zusatzeinrichtung eine sogenannte Set-Top-Box zur Dekodierung digitaler Fernsehprogramme umfassen. Bei Anschluß mehrerer TV-Geräte, die nicht immer alle gleichzeitig Zugriff auf unterschiedliche digitale Programme benötigen, kann damit eine erhebliche Reduktion der Anzahl der erforderlichen Decoder im Hause erreicht werden.

Ganz besonders bevorzugt ist auch eine Ausführungsform der erfindungsgemäßen Netzübergangseinrichtung, bei der die kombinierte Vermittlungs- und Steuereinheit über das Hausnetzwerk mit einem Personalcomputer (PC) verbunden ist, über den Systemkonfigurationen und Festlegung von Endgeräteberechtigungen, sowie Zuordnung der Leistungsmerkmale einer Vermittlungseinrichtung für den Betrieb, Überwachungen von Gebührenerfassungen und/oder Kommunikation mit einem anderen Endgerät im Hausnetzwerk oder einem Endgerät in einem Teilnehmeranschluß-Netzwerk durchgeführt werden können. Außer den oben beispielhaft genannten Funktionen kann mit einem solchen PC auch eine Auswahl bestimmter Informationssignalpfade getroffen werden, wodurch z.B. der jeweils billigste Anbieter für bestimmte kommunikative Dienstleistungen ausgewählt wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: eine schematische Systemübersicht über die Anschlußmöglichkeiten mit einer erfindungsgemäßen Netzübergangseinrichtung; und
- Fig. 2: ein Schema der globalen Struktur einer erfindungsgemäßen Netzübergangseinrichtung.

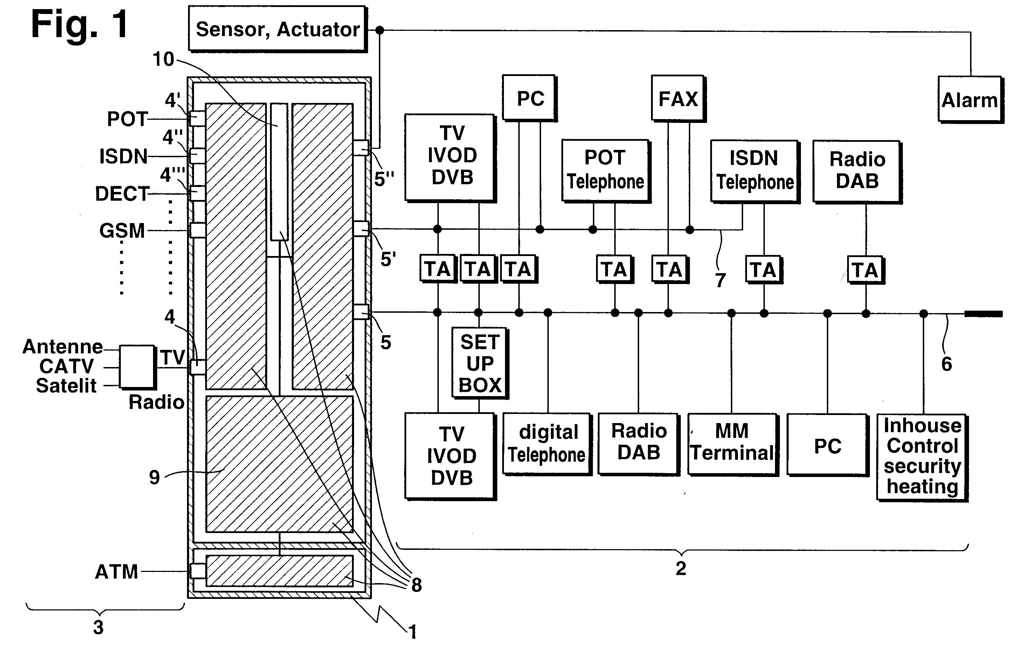

In der schematischen Darstellung von Fig. 1 ist eine Netzübergangseinrichtung 1 gezeigt, die eine aus mehreren Modulen bestehende kombinierte Vermittlungs- und Steuereinheit 8 umfaßt. Insbesondere enthält die kombinierte Vermittlungs- und Steuereinheit 8 einen Computer, der durch einen Mikroprozessor 9 realisiert sein kann. Eines der Module der kombinierten Vermittlungs- und Steuereinheit 8 ist auch eine Speichereinheit 10.

Die Netzübergangseinrichtung 1 ist über Schnittstellen, die im folgenden mit "äußeren" Schnittstellen 4, 4', 4'', 4''',... bezeichnet werden sollen, mit diversen Teilnehmerzugangsanschlüssen, Netzwerken, wie beispielsweise POT, ISDN, DECT, Stromnetz, GSM, CATV, ATM usw. verbunden. Die Gesamtheit aller Teilnehmeranschluß-Netzwerke ist in Fig. 1 pauschal mit der Bezugsziffer 3 gekennzeichnet. Bei den einzelnen Teilnehmeranschluß-Netzwerken kann es sich um völlig unterschiedliche Arten von Netzwerken handeln, beispielsweise um koaxialkabelgestützte Netzwerke (Kabel-TV etc.), um Klingeldrahtnetzwerke (klassisches Telefonnetz POT, ISDN, etc.) oder um drahtlose Netzwerke (DECT, GSM, usw.). Denkbar ist aber auch eine Informationsübertragung über eine Kraftstromleitung, die ja praktisch auch jeden Haushalt und jede geschäftliche Einrichtung anfährt.

Auf der anderen Seite ist die Netzübergangseinrichtung 1 über "innere" Schnittstellen 5, 5', 5'' mit einem Hausnetzwerk 2 verbunden, das seinerseits eine Vielzahl von Unternetzwerken bzw. Einzelanschlüsse umfassen kann. Ein solches Unternetzwerk ist das in jedem Haushalt in der Regel vorhandene Klingeldrahtnetz 7, an dem als Endgeräte herkömmliche Telefone (POT), ISDN-Telefone, aber auch FAX-Geräte, PCs, TV-Geräte und dergleichen angeschlossen sein können. Ein weiteres in fast allen Haushalten vorhandenes Netzwerk ist ein Koaxialkabelnetz 6, an welches normalerweise Radio- und Fernsehgeräte angeschlossen sind. Daneben können aber auch digitale Telefongeräte, MM-Terminals, PCs und eine ganze Reihe von anderen Geräten zur hausinternen Überwachung, Regelung und Kontrolle von Einrichtungen angeschlossen sein.

Diese Einrichtungen können beispielsweise Heizungsanlagen, Beleuchtungsanlagen, Rolladensysteme und dergleichen umfassen.

Schließlich ist als weiteres Anwendungsbeispiel in Fig. 1 ein Alarmsystem gezeigt, bei dem sowohl hausinterne Endgeräte als auch außerhalb des Hauses befindliche Geräte, wie beispielsweise Sensoren, Türöffnungsgeräte, Video-Überwachungskameras, Klingelknöpfe und dergleichen über eine innere Schnittstelle 5'' mit der Netzübergangseinrichtung 1 verbunden sind. Dadurch läßt sich auch eine Verbindung der eingehenden und ausgehenden Signale mit anderen Endgeräten im Hausnetzwerk 2, beispielsweise PCs, Video-Monitoren und dergleichen herstellen. Auch kann ein Alarm beispielsweise die Absendung einer Botschaft über die äußeren Schnittstellen 4, 4' usw. und über ein Teilnehmeranschluß-Netzwerk, beispielsweise das Telefonnetz, zu einer äußeren Stelle, beispielsweise einer Polizei- oder Feuerwehrdienststelle, auslösen. Andererseits können aber auch die Verbrauchswerte von hausinternen Geräten, beispielsweise Gas, Wasser, Strom und dergleichen automatisch abgelesen, der Vermittlungs- und Steuereinheit 8 zugeleitet und dort entweder in der Speichereinheit 10 abgespeichert und/oder automatisch an entsprechende Anbieter, beispielsweise ein Gaswerk, ein Wasserwerk oder einen Energieversorger weitergeleitet werden.

Umgekehrt kann aber auch durch Fernwirkung nach Eingabe eines entsprechenden Paßworts oder Codes zum Beleg einer Zugangsberechtigung von außen her beispielsweise über das Telefonnetz, ein Funknetz oder dergleichen auf hausinterne Endgeräte eingewirkt werden. Beispiele für derartige Fernwirkoperationen wurden bereits oben beschrieben. Insbesondere durch die Einschaltung von Computer-Endgeräten in das Hausnetzwerk 2 können diese Möglichkeiten aufgrund des Einsatzes von entsprechender Software noch erheblich erweitert werden.

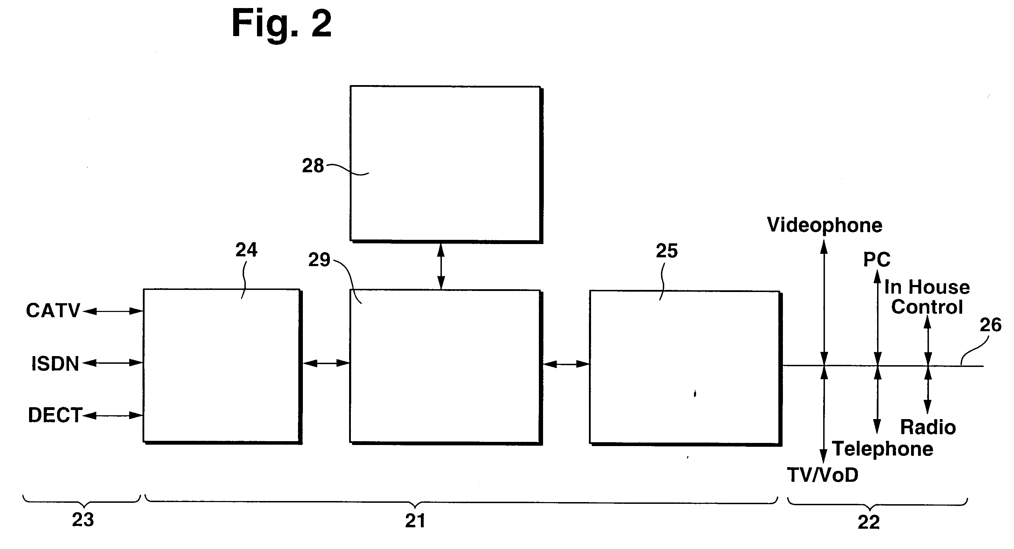

In Fig. 2 ist plakativ die Grobstruktur des erfindungsgemäßen Systems dargestellt. Eine Netzübergangseinrichtung 21 umfaßt ein Netzwerkszugriffmodul (network access) 24, mit dem auf die unterschiedlichsten Teilnehmeranschluß-Netzwerke 23 über entsprechend ausgestaltete Schnittstellen zugegriffen werden kann. Die Informationssignale aus dem Netzwerkszugriffsmodul 24 gelangen über eine Vermittlungs- und Steuereinheit 29 zu einem Prozessor 28, an den auch Speichereinheiten, Servereinheiten und dergleichen angeschlossen oder in ihm integriert sind. Insbesondere wird der Prozessor 28 von einer entsprechenden Software gesteuert. Auf der anderen Seite kommuniziert der Prozessor 28 über ein Hauszugriffsmodul (in home access) 25, das ebenfalls mit entsprechenden Schnittstellen ausgerüstet ist, mit einem Hausnetzwerk 22, das verschiedene Kabelnetze umfassen kann, insbesondere ein Haus-Bus-System 26, an welches diverse Endgeräte, wie beispielsweise TV, Videophon, Telefon, PCs, Radiogeräte und Steuergeräte für andere im Haus befindliche Einrichtungen angeschlossen sind. Ein wesentlicher Vorteil dieses Systems besteht unter anderem auch darin, daß bereits vorhandene Strukturen, aber auch zu einem späteren Zeitpunkt entwickelte Strukturen ohne weiteres über geeignete Schnittstellen angeschlossen werden können.

## Patentansprüche

1. Netzübergangseinrichtung (1; 21) zur Verbindung eines Hausnetzwerks (2; 22) mit Teilnehmeranschluß-Netzwerken (3; 23) von Diensteanbietern mit einer ersten äußeren Schnittstelle (4) zur Aufnahme von Informationssignalen aus Koaxialkabeln von Teilnehmeranschluß-Netzwerken und mit mindestens einer inneren Schnittstelle (5) zur Weiterleitung der Informationssignale an Endgeräte im Hausnetzwerk (2; 22) über Koaxialkabel (6),
dadurch gekennzeichnet,
daß weitere äußere Schnittstellen (4', 4'', 4''',...) zum interaktiven Austausch von Informationssignalen mit weiteren Arten von Teilnehmeranschluß-Netzwerken vorgesehen sind, wobei mindestens eine äußere Schnittstelle (4') eine Verbindung zu einem Teilnehmeranschluß-Netzwerk mit symmetrisch verdrillten Kabeln ("Klingeldraht") herstellt, und daß eine kombinierte Vermittlungs- und Steuereinheit (8), insbesondere mit einem Mikroprozessor (9; 29) vorgesehen ist, die jeweils die Informationssignale eines bestimmten Diensteanbieters von der entsprechenden äußeren Schnittstelle (4, 4', 4'', 4''',...) des Teilnehmeranschluß-Netzwerkes an eine oder mehrere innere Schnittstellen (5, 5', 5'') des Hausnetzwerkes (2; 22) oder vice versa leitet.

2. Netzübergangseinrichtung nach Anspruch 1, dadurch gekennzeichnet, daß eine Vermittlungseinheit (8) zur bedarfsweisen Verbindung eines Teilnehmeranschluß-Netzwerks für eine bestimmte Dienstekategorie, beispielsweise Telefondienste, mit einem im Hausnetzwerk enthaltenen Klingeldraht-Netz (7) vorgesehen ist.

3. Netzübergangseinrichtung nach Anspruch 2, dadurch gekennzeichnet, daß die Vermittlungseinheit (8) sowohl schmalbandige als auch breitbandige uni- und bidirektionale Informationssignale verarbeiten kann.

4. Netzübergangseinrichtung nach einem der vorhergehenden Ansprüche, dadurch gekennzeichnet, daß an eine oder mehrere innere Schnittstellen (25) ein Haus-Bus-System (26) angeschlossen ist, über welches ein Austausch von Informationssignalen zwischen der kombinierten Vermittlungs- und Steuereinheit (28, 29) und beliebigen Endgeräten im Hausnetzwerk (22) ermöglicht wird.

5. Netzübergangseinrichtung nach einem der vorhergehenden Ansprüche, vorzugsweise nach Anspruch 4, dadurch gekennzeichnet, daß ein Endgerät eine Vorrichtung zur Betätigung einer Heizungsanlage und vorzugsweise einen Temperaturmeßfühler umfaßt.

6. Netzübergangseinrichtung nach einem der vorhergehenden Ansprüche, vorzugsweise nach Anspruch 4, dadurch gekennzeichnet, daß ein Endgerät eine Vorrichtung zur Betätigung einer Beleuchtungsanlage und vorzugsweise einen Helligkeitssensor umfaßt.

7. Netzübergangseinrichtung nach einem der vorhergehenden Ansprüche, vorzugsweise nach Anspruch 4, dadurch gekennzeichnet, daß ein Endgerät eine Vorrichtung zur Betätigung eines Rolladens und vorzugsweise einen Helligkeitssensor umfaßt.

8. Netzübergangseinrichtung nach einem der vorhergehenden Ansprüche, vorzugsweise nach Anspruch 2 und/oder 4, dadurch gekennzeichnet, daß ein Endgerät eine Vorrichtung zur Überwachung der Umgebung auf physikalische Veränderungen, beispielsweise einen Rauchmelder, einen Feuermelder, einen Gasmelder oder einen Wassermelder umfaßt, und daß die kombinierte Vermittlungs- und Steuereinheit (8) bei Empfang eines Informationssignales von diesem Endgerät ein Alarmsignal zur Auslösung eines Alarms an eine Alarmeinrichtung weitergibt.

9. Netzübergangseinrichtung nach Anspruch 8, dadurch gekennzeichnet, daß das Endgerät mit einem oder mehreren Sensoren einer Einbruchssicherungsanlage verbunden ist, und daß ein Alarmsignal automatisch über ein äußeres Telekommunikationsnetzwerk beispielsweise an eine Polizeidienststelle weitergeleitet werden kann.

10. Netzübergangseinrichtung nach einem der vorhergehenden Ansprüche, vorzugsweise nach Anspruch 2 und/oder 4, dadurch gekennzeichnet, daß ein Endgerät eine Einrichtung zur Verbrauchsablesung, beispielsweise einen Strom-, Wasser- oder Gaszähler umfaßt, und daß die kombinierte Vermittlungs- und Steuereinheit (8) in festlegbaren Zeitabständen Daten von abgelesenen Verbrauchswerten empfängt.

11. Netzübergangseinrichtung nach Anspruch 10, dadurch gekennzeichnet, daß eine Speichereinheit (10) vorgesehen ist, in der die abgelesenen Verbrauchswerte abgespeichert und ggf. abgerufen werden können.

12. Netzübergangseinrichtung nach Anspruch 10 oder 11, dadurch gekennzeichnet, daß die Daten von abgelesenen Verbrauchswerten automatisch oder nach Anfrage über eine äußere Schnittstelle (4, 4', 4'', 4''',...) auf ein äußeres Telekommunikationsnetzwerk und zu einem Anbieter, beispielsweise einem Energieversorger, einem Wasserwerk oder einem Gaswerk gesendet werden können.

13. Netzübergangseinrichtung nach einem der vorhergehenden Ansprüche, vorzugsweise nach Anspruch 2 und/oder 4, dadurch gekennzeichnet, daß die kombinierte Vermittlungs- und Steuereinheit (8) Fernwirksignale über eine der äußeren Schnittstellen (4, 4', 4'', 4''',...) empfangen und nach Überprüfung einer Berechtigung, z. B. eines Paßworts an ein an das Hausnetzwerk (2; 22) angeschlossenes Endgerät weiterleiten kann.

14. Netzübergangseinrichtung nach einem der vorhergehenden Ansprüche, vorzugsweise nach Anspruch 2 und/oder 4, dadurch gekennzeichnet, daß eine Türsprechanlage vorgesehen ist, die ein Endgerät mit einer Betätigungseinheit zur ferngesteuerten Türöffnung, einem Mikrophon, einem Lautsprecher und ggf. einer Videokamera umfaßt, welches an eine Schnittstelle (5'') der Netzübergangseinrichtung (1; 21) angeschlossen ist, und die einen Türruf mindestens an ein weiteres Endgerät leitet, welches über das Hausnetzwerk (2; 22) an eine innere Schnittstelle (5'') angeschlossen ist, oder welches über die Netzübergangseinrichtung (1; 21) per Fernwahl erreichbar ist.

15. Netzübergangseinrichtung nach einem der vorhergehenden Ansprüche, vorzugsweise nach Anspruch 2, dadurch gekennzeichnet, daß die kombinierte Vermittlungs- und Steuereinheit (8) eine Einrichtung zur Gebührenerfassung für Telekommunikationsdienste umfaßt.

16. Netzübergangseinrichtung nach einem der vorhergehenden Ansprüche, vorzugsweise nach Anspruch 2, dadurch gekennzeichnet, daß die kombinierte Vermittlungs- und Steuereinheit (8) eine Server-Einrichtung zur Aufnahme, Zwischenspeicherung und Abrufung von Nachrichten, beispielsweise Voice Mail (Anrufbeantworter), Data Mail und/oder Video Mail umfaßt.

17. Netzübergangseinrichtung nach einem der vorhergehenden Ansprüche, dadurch gekennzeichnet, daß eine Zusatzeinrichtung zur Dekodierung empfangener Signale vorgesehen ist.

18. Netzübergangseinrichtung nach Anspruch 17, dadurch gekennzeichnet, daß die Zusatzeinrichtung eine Set Top Box zur Dekodierung digitaler Fernsehprogramme umfaßt.

19. Netzübergangseinrichtung nach einem der vorhergehenden Ansprüche, dadurch gekennzeichnet, daß die kombinierte Vermittlungs- und Steuereinheit (8) über das Hausnetzwerk (2; 22) mit einem Personalcomputer (PC) verbunden ist, über den Systemkonfigurationen und Festlegung von Endgeräteberechtigungen, sowie Zuordnung der Leisungsmerkmale einer Vermittlungseinrichtung für den Betrieb, Überwachungen von Gebührenerfassungen und/oder Kommunikation mit einem anderen Endgerät im Hausnetzwerk (2; 22) oder einem Endgerät in einem Teilnehmeranschluß-Netzwerk durchgeführt werden können.
